# EUROPEAN PATENT APPLICATION

(11) **EP 2 199 046 A1**
(43) Date of publication of application: **23.06.2010**
(21) Application number: 08450202.0
(22) Date of filing: 22.12.2008
(51) Int. Cl.: B27K 3/15, B27K 3/34, D21H 21/36, D21H 17/06, D21H 17/20

(54) **Lignocellulosic substrates with enhanced antibacterial properties and method for obtaining those**

(71) Applicant: Kompetenzzentrum Holz GmbH, 4021 Linz (AT)
(72) Inventor: Widsten, Petri, 9300 St. Veit an der Glan (AT); Kandelbauer, Andreas, 9300 St. Veit an der Glan (AT); Heathcote, Carol, 9300 St. Veit an der Glan (AT)
(74) Representative: Beer, Manfred

(57) **Abstract**

Oligomeric or polymeric tannins can be covalently bonded onto the surface of wood or other lignocellulosic materials by enzymatically catalyzed oxidation. Lignocellulosic surfaces modified in such a way show improved antibacterial (bactericidal or bacteriostatic) properties compared to untreated lignocellulosic surfaces.

## Description

### Field of the invention:

The present invention is concerned with imparting antibacterial properties to lignocellulosic surfaces and with lignocellulosic substrates with antibacterial properties.

### Background of the invention:

Improving hygienic standards in many parts of the world allow infectious diseases to be increasingly better controlled. Aside from contagion through contaminated air and direct contact with infected people or animals, contaminated objects play an important role in the spread of infectious diseases. The hygienic properties of material surfaces are therefore important, particularly in intensely used environments such as hospitals and private kitchens where e.g. furniture and flooring may harbor harmful microorganisms. Faecal agents from infectious diseases of the intestinal tract are easily spread from sanitary installations to kitchen environments through toilet articles, cleaning equipment, and hands. Contamination may spread from fingers to other surfaces and, directly or indirectly (e.g., through contaminated cutlery), further to foodstuffs. Normal cleaning practices are mostly insufficient for elimination of bacterial or viral contaminants such as salmonellas, campylobacteria, *Escherichia coli,* or noroviruses. A visually thorough cleaning with detergents and disinfectants may not be sufficient for the elimination of all harmful microbes. The hygienic requirements set for surfaces depend on whether they are floors, horizontal work surfaces, or vertical non-work surfaces; whether they are in kitchen or sanitary areas; and whether they are in private premises or public places such as hospitals. While the requirements are high for hospitals with a large number and variety of germs and intense movement of people, other considerations such as mechanical and thermal resistance often receive priority in domestic indoor environments.

Microorganisms can easily attach themselves to material surfaces. For maintaining general hygiene, it often suffices when no growth of microorganisms, especially bacteria and fungi, takes place at the surface. Unfortunately, this is not usually the case for uncoated and untreated wood surfaces. For additional antimicrobial resistance, growth-retarding or microbicidal additives can be used. As regards the practical applications of antimicrobial agents, it is desirable to obtain long-term protective effects with minimal concentrations. Ideally, the active agents are immobilized so that they are not gradually washed off. However, it should be ensured that the immobilization of active agents does not significantly impair their efficiency. Further, the ability of microorganisms to build up resistance toward the active agents should be low.

Antimicrobial additives can work through ingestion by the organism or as contact poisons. Contact poisons work by adhering to the cell walls from the outside; they might disrupt material transport through the cell membrane or cause mechanical damage to the cell wall. However, antimicrobial additives, particularly when not immobilized, cannot always be distinctly classified according to their mechanism of action. The effects of contact poisons rapidly manifest themselves upon their application. By contrast, many other poisons are activated inside the cell and must thus be taken up by the microorganisms. Typical such poisons are organic compounds of low molecular weight and solubility.

Considering the effectiveness of bactericides, a distinction needs to be made between two types of bacteria: Gram-positive and -negative. Their essential difference lies in their cell wall structure which determines their sensitivity to chemicals. For the determination of bactericide efficiency it is important to carry out tests with bacteria representative of both types. *Staphylococcus aureus* and *Bacillus subtilis* are typical Gram-positive bacteria while common Gram-negative bacteria include *Escherichia coli, Pseudomonas aeruginosa,* and *Salmonella typhimurium.*

The efficiency of antibacterial agents is often determined by contacting them directly with live cell cultures. This often involves determination of the so-called minimal inhibitory concentration (MIC); i.e., the minimum concentration of antibacterial agent required to inhibit bacterial growth. MIC is determined by contacting the material at different concentrations with a culture medium inoculated, e.g., with S. *aureus* or *E. coli.* This method immediately reveals the biocidal power and mechanism of action of the additive. However, the test gives little indication as to the bacterial resistance of products treated with such substances. There are no set guidelines for testing of antimicrobial properties of many wood-based products. One way to test the growth-inhibiting effect of chemicals on wood surfaces is to inoculate the wood surface with bacteria and count the number of colony-forming units.

In order for antimicrobial additives to be bioavailable at the product surface, they can be applied directly onto the surface. The additives should be leach-resistant to obtain a long-term protective effect. A major disadvantage of low-molecular weight additives is that they are easily washed off and could thus find their way into foodstuffs. Although antimicrobial additives are ideally non-toxic because of their often specific effect on bacterial cell walls, some could have harmful effects on human health. Pyridinium compounds, for example, have caused allergic reactions. Public awareness of the potentially non-negligible health hazards posed by certain antimicrobial additives such as nonylphenols has increased; perhaps the most controversial antimicrobial agent is triclosane, a commonly used bacterial growth inhibitor linked to cancer and developmental disorders.

A large number of different substances show some degree of antimicrobial activity. The bactericidal properties of different compound groups vary significantly and they are not all equally well suited for all applications. Such compounds described in the literature include phosphonium salts, protoporphyrine-based sulfonium salts, antibiotics, chlorophenyl derivatives, biomimetic polyamides, arylsulfonyl, aminobenzylsulfonyl acrylamide, quaternary ammonium salts, 2,4,4'-trichloro-2'-hydroxydiphenolether (triclosane), and 2,3,5,6-tetrachloro-4-methylsulfonylpyridine. Also diiodomethyl-*p*-toluenesulfone, zinc and sodium pyrithione, azoles, polyhexamethylene biguanide hydrochloride, 3,4,4'-trichlorocarbanilide, and furanone are potential additives. Other antimicrobial compounds are those based on heterocyclic compounds such as pyridine or isothiazolone. Well-known commercially available products include the preparations manufactured by the Microban and Sanitized companies.

Phenolic compounds are known antimicrobial additives that work through cell wall destruction. Phenols also cause intracellular coagulation of cytoplasm components which may result in growth inhibition or cell death. Organic acids such as benzoic acid and its derivatives inhibit the active uptake of amino and oxoacids. Other examples of phenolic compounds include halogenated phenols and hydroxytoluene. Some polymers are antimicrobial because of the type and arrangement of their functional groups. Polymers can also be rendered antimicrobial by introduction of antimicrobial moieties. This can involve chemical modification of end-groups or immobilization of low-molecular weight biocidal compounds on precursors or final products. Through immobilization and end-group modification, they become part of the polymer framework and can no longer be washed off. In contrast to surfaces giving off low-molecular weight antibacterial agents, such surfaces kill pathogens particularly on contact.

In a narrow sense of the term, the effectiveness of antimicrobial polymers depends directly on the chemical structure of the macromolecules. The antimicrobial effect is due to end-groups of high polarity and the 3-dimensional polymer structure that focuses these groups producing areas of high charge density. Antimicrobial polymers are water-insoluble and are thus not leached out, remaining bactericidal for extended periods. The danger of undesired side effects by low-molecular weight toxic components is thus low. Such polymers include quaternary ammonium compounds (poly-quats); matrix-immobilized N-alkyl poly(4-vinylpyridine); chitosan, a natural polymer used in food packaging that owes its biocidal properties to its polycationic carbohydrate structure; and acrylate-based antimicrobial polymers.

The mechanism of action of antimicrobial polymers is completely different from that of monomeric antimicrobial agents. While low-molecular weight compounds diffuse into cells or accumulate in the cell walls, polymeric biocides affect the central membrane functions of microorganisms from the outside by electrostatic interaction with the cell wall. The biocidal effect is very unspecific and encompasses both Gram-positive and -negative bacteria.

Antimicrobial properties can also be imparted to polymers by introduction of antimicrobial functional groups, e.g., by chemical modification of their end-groups or by covalent binding of antimicrobial substances. Many low-molecular weight phenols show antibacterial properties also in polymeric or immobilized form. The antibacterial effects of phenols are believed to be at least partly due to their hydroxyl groups and, if present, carboxyl groups. One method of phenol immobilization is their grafting to a polymer surface. Laccase in particular is well-suited for this approach involving oxidation of the lignin and phenols to phenoxy radicals followed by coupling reactions between lignin-based radicals and the radicals in the compounds to be grafted. As reported by Schröder et al. (Biotechnology Journal 2, p. 1-8, 2007), flax fibers modified with ferulic acid or hydroquinone monomers in the presence of laccase show improved antibacterial activity toward *B. subtilis* and *E. coli.* The antibacterial properties of unbleached kraft paper toward *S. aureus* and *E. coli* were boosted by their laccase-assisted modification with monomeric natural phenols such as caffeic acid or isoeugenol or their oligomeric coupling products (Elegir et al. 2008, Enzyme and Microbial Technology 43, p. 84-93). The antibacterial effects of oligomeric phenols produced by laccase pretreatment of the monomeric phenols were far superior to those of the monomeric phenols, possibly because of better electron delocalization and the branched structure of the phenols.

The above methods based on grafting of monomeric phenols suffer from two drawbacks: the limited availability of the phenols from natural sources at a reasonable cost for lignocellulosic applications, and the need for the monomers to be pre-polymerized or polymerize *in situ* during their grafting to the lignocellulosic substrate. The radical-based polymerization reaction also removes part of the phenolic hydroxyl groups contributing to the antibacterial activity of the phenols.

### Objective and summary of the invention:

The present invention is concerned with imparting antibacterial properties to lignocellulosic surfaces by laccase-assisted grafting of tannins onto lignocellulosic substrates. Tannins overcome the problems of the state-of-the-art based on monomeric phenols by being readily available in industrially relevant amounts and cost, by possessing a large number of antibacterial phenolic hydroxyl groups per aromatic ring, and by being oligomeric with a nominal weight-average molar mass of 1294 g/mol. Since the polyphenolic tannins are already oligomeric, there is little loss of phenol activity via tannin polymerization, and no relatively ineffective monomeric phenols are grafted to the substrate.

Phenol-oxidizing enzymes such as laccase and peroxidases are obtained from white-rot fungi, bacteria, and other natural sources. They include phenoloxidases such as laccase and any other type of enzymes such as peroxidases able to catalyze the oxidation of phenolic substrates regardless of their origin. In the presence of oxygen (O₂) or hydrogen peroxide, respectively, laccase and peroxidases catalyze the oxidation of phenolic substrates to phenoxy radicals and give water as the by-product. For the purposes of the present invention, particularly preferred phenol-oxidizing enzymes are laccases and peroxidases obtained from white-rot fungi such as *Coriolus versicolor, Myceliophtora thermophila,* or *Trametes hirsuta.*

One embodiment of the present invention is based on the use of hydrolyzable gallo- and ellagitannins, which are water-soluble and mostly oligomeric polyphenols of high laccase reactivity obtained from the leaves, galls, bark, and wood of certain wood species. Hydrolyzable tannins are able to be hydrolyzed by weak acid or bases. Because of their large phenolic hydroxyl group content, they are highly reactive toward phenol-oxidizing enzymes. The simplest hydrolyzable tannins are gallotannins based on gallic acid (3,4,5-trihydroxyl benzoic acid) esters (polygalloyl esters of glucose). Tannic acid, the commercial gallotannin product used in some of the examples of the present invention, is obtained by extraction from galls and leaves of sumac and Aleppo oak. It is a heterogeneous mixture of mainly oligomeric galloyl esters of glucose with a nominal molecular weight of 1294 g/mol.

Another embodiment of the present invention concerns proanthocyanidins, which are flavonoid-based, oligomeric or polymeric polyphenols based on catechin and similar flavanoids. These "condensed" tannins are usually derived from the wood, bark, nut shells, and other parts of wood species such as chestnut, gambier, hickory, mimosa, pine, and quebracho. Condensed tannins are used in large amounts in leather tanning and other industries. They are water-soluble except for some very large molecules.

A further embodiment of the present invention is based on the use of cationic tannin, aiding the adsorption of tannin onto anionic surfaces such as wood pulp. Such tannins can be produced according to the Mannich-reaction by reacting condensed tannin with an aldehyde such as formaldehyde and an amine such as diethylamine. Cationic tannins are commercially available and used as flocculants in wastewater treatment.

Lignocellulosic materials comprise not only wood but also lignin-containing non-wood materials such as agrifibers and grasses (e.g., wheat straw, rice straw, flax, kenaf, jute, hemp, reed canary grass, and giant reed). The lignocellulosic materials and any products made thereof that can be provided with antibacterial resistance by laccase-assisted grafting of tannins within the scope of the present invention include (but are not limited to) solid wood; lignin-containing paper products made from unbleached or partially bleached chemical, semichemical, or mechanical pulps such as paperboard and tissue paper; and uncoated wood composite boards or wood laminates such as hardboards, high-density fiberboard, or plywood. Examples of typical use applications that can be envisaged include wood surfaces subject to bacterial contamination in kitchens or food processing plants on which meat or other microbiologically sensitive foodstuffs are handled or fruit and vegetable boxes made of paperboard. Any uncoated solid wood or wood-based board surfaces in hospitals could also be provided with a tannin coating. Although many such surfaces with surface-grafted tannins would probably still require cleaning by conventional means using detergents, the result of such cleaning is seldom thorough and tannins afford an extra level of protection which is also present while the foodstuffs are being handled and between the cleaning periods. Aside from wood, tannins occur also in many foods and drinks such as fruits and berries, legumes, chocolate, wine, fruit juice, and tea where they are either naturally present or introduced during the manufacturing process. Although an excessive ingestion of tannins may interfere with normal mineral absorption from food, small amounts of tannin would thus not constitute a health hazard if passed on to foodstuffs from a work surface or a packaging material and ingested. The tannin coating on work surfaces such as kitchen worktops could be replenished regularly if the coating wears off during use.

The grafting of tannins onto lignocellulosic materials can be performed in several ways depending on the type of application.

One embodiment of the present invention comprises imparting solid wood with antibacterial properties by placing a wooden object in an aqueous tannin solution containing laccase, providing agitation, and allowing sufficient time for radicals to form in the tannin and wood lignin and for the lignin- and tannin-based phenoxy radicals to couple. A variant of this method which is particularly suitable for horizontal surfaces is spraying a tannin-laccase solution onto the wood surface. If desired, any unbound tannin can be washed off with water after the reaction.

In another embodiment of the invention, paperboard such as corrugated medium or linerboard used for containerboard boxes is rendered antibacterial by allowing the pulp to react with tannin and laccase. The treatment can be carried out during stock preparation by mixing tannin and laccase with the pulp, or by preparing the paper sheet first and applying tannin and laccase by spraying after the dewatering stage. To aid tannin retention in pulp, the tannin can be rendered cationic by reacting it with an aldehyde and an amine according to the Mannich-reaction; such cationic tannins are also commercially available. In a further embodiment of the invention, an uncoated wood-based composite board or laminate, for hardboard, is sprayed with a laccase-containing aqueous tannin solution to boost its antibacterial properties.

In a preferred embodiment of the present invention, the phenol-oxidizing enzyme used for radical formation in tannin and lignocellulosic materials is laccase. However, other phenol-oxidizing enzymes such as peroxidases may also be used.

In a preferred and possible embodiment of the inventive method the lignocellulosic material is uncoated solid wood.

In a preferred and possible embodiment of the inventive method the lignocellulosic material is unbleached or partially bleached chemical, semichemical, or mechanical wood pulp used for making paper or paperboard.

In a preferred and possible embodiment of the inventive method the wood pulp has been fabricated into a paper sheet.

In a preferred and possible embodiment of the inventive method the lignocellulosic material is an uncoated wood composite board such as a hardboard, fiberboard, particleboard, or oriented strandboard.

In a preferred and possible embodiment of the inventive method the lignocellulosic material is a wood veneer, plywood, or a wood laminate.

In a preferred and possible embodiment of the inventive method the lignocellulosic material is not wood but non-wood lignocellulosic material based on agrifibers or perennial plants.

In a preferred and possible embodiment of the inventive method the lignocellulosic material treated with tannin and phenol-oxidizing enzyme has been fabricated into a product or a product component such as furniture, flooring, a box or other packaging material, a bathtub, or a kitchen worktop.

In a preferred and possible embodiment of the inventive method the tannin is a hydrolyzable tannin product such as tannic acid or its derivative.

In a preferred and possible embodiment of the inventive method the tannin is condensed tannin (proanthocyanidin) or its derivative.

In a preferred and possible embodiment of the inventive method the tannin has been rendered cationic by, for example, reacting it with an aldehyde and an amine (Mannich-reaction).

In a preferred and possible embodiment of the inventive method the phenol-oxidizing enzyme is laccase.

In a preferred and possible embodiment of the inventive method the lignocellulosic material is contacted with tannin and phenol-oxidizing enzyme in an aqueous solution, suspension, or slurry.

In a preferred and possible embodiment of the inventive method the lignocellulosic material is contacted with tannin and phenol-oxidizing enzyme by spraying or otherwise spreading tannin and phenol-oxidizing enzyme onto the surface of the material.

In a preferred and possible embodiment of the inventive method the lignocellulosic material is contacted with tannin and phenol-oxidizing enzyme in two or more separate steps.

The invention also concerns a lignocellulosic substrate with a surface having antibacterial properties, **characterized in that** tannins are grafted onto the lignocellulosic substrate.

In a preferred embodiment the invention also concerns a lignocellulosic substrate wherein the tannins are grafted onto the lignocellulosic substrate with assistance of a phenol-oxidizing enzyme.

In a preferred embodiment the invention also concerns a lignocellulosic substrate, wherein the lignocellulosic substrate is uncoated solid wood.

In a preferred embodiment the invention also concerns a lignocellulosic substrate, wherein the lignocellulosic substrate is unbleached or partially bleached chemical, semichemical, or mechanical wood pulp used for making paper or paperboard.

In a preferred embodiment the invention also concerns a lignocellulosic substrate, wherein the wood pulp has been fabricated into a paper sheet.

In a preferred embodiment the invention also concerns a lignocellulosic substrate, wherein the lignocellulosic substrate is an uncoated wood composite board such as a hardboard, fiberboard, particleboard, or oriented strandboard.

In a preferred embodiment the invention also concerns a lignocellulosic substrate, wherein the lignocellulosic substrate is a wood veneer, plywood, or a wood laminate.

In a preferred embodiment the invention also concerns a lignocellulosic substrate, wherein the lignocellulosic substrate is not wood but non-wood lignocellulosic material based on agrifibers or perennial plants.

In a preferred embodiment the invention also concerns a lignocellulosic substrate, wherein the lignocellulosic substrate treated with tannin and phenol-oxidizing enzyme is a product or a product component such as furniture, flooring, a box or other packaging material, a bathtub, or a kitchen worktop.

In a preferred embodiment the invention also concerns a lignocellulosic substrate, wherein the tannin is a hydrolyzable tannin product such as tannic or its derivative.

In a preferred embodiment the invention also concerns a lignocellulosic substrate, wherein the tannin is condensed tannin (proanthocyanidin) or its derivative.

In a preferred embodiment the invention also concerns a lignocellulosic substrate, wherein the pehnol-oxidizing enzyme is laccase.

### Detailed description of the invention:

Preferred embodiments of the invention shall now be described as non-limiting examples only.

### Example 1

The minimal inhibition concentration (MIC) of a hydrolyzable tannin product (tannic acid) and three condensed tannins was determined using a Gram-positive bacterium (*S. aureus*) and a Gram-negative bacterium (*E. coli*). The results are compiled in Table 1 and show that tannic acid in particular effectively inhibits the growth of S. *aureus.* At higher concentrations, most of the tannins are also effective against *E. coli.*

**Table 1. MIC of different tannins on Staphylococcus aureus and Escherichia coli**

| Tannin | MIC (mM) | |
|---|---|---|
| | *Staphylococcus aureus* | *Escherichia coli* |
| Tannic acid | 0.625 | 10.0 |
| Chestnut tannin | 2.50 | 10.0 |
| Quebracho tannin | 5.00 | 20.0 |
| Mimosa tannin | 5.00 | NI*^{a}* |

| | | |
|---|---|---|
| *^{a}* No inhibition observed under the conditions of the experiment | | |

### Example 2 - Sample 2 in Table 2

A spruce wood veneer (17 mm x 17 mm x 1 mm) was immersed in an aqueous phosphate buffer solution containing dissolved tannic acid (0.9 mmol/g on dry wood basis, pH 6.7, 40°C) in a 100 ml glass beaker at a consistency of 10%. Laccase (1000 nkat/g on dry wood) was added and the mixture was shaken for 6h; since the veneer floated on the surface, it was flipped over every hour. After reaction, the veneer was thoroughly washed by shaking in 200 ml of hot water (80°C) for 15 min and repeating this procedure twice with fresh water. After the last washing, the veneer was soaked overnight in the water and then allowed to air-dry in a conditioning room at 20°C. The mass change resulting from the treatment was recorded. The antibacterial effect of the grafted tannin acid was determined by inoculating the wood surface with S. *aureus* and counting the number of colony forming units (CFUs) after 24 h. The reference was the bacterial count obtained with untreated wood. The results (Table 2) show that tannic acid had a bactericidal effect on S. aureus.

### Example 3 - Sample 3 in Table 2

Tannic was grafted onto spruce veneer as in Example 1 except that the laccase dose was 500 nkat/g. The weight change and antibacterial effect of the treatment against *E. coli* is shown in Table 2. The treatment had a bactericidal/bacteriostatic effect against *E. coli.*

### Example 4 - Sample 4 in Table 2

Mimosa tannin was grafted onto spruce veneer as in Example 1 except that the laccase dose was 500 nkat/g. The weight change and antibacterial effect of the treatment against S. *aureus* (bactericidal) and *E. coli* (no effect) is shown in Table 2.

### Example 5 - Sample 1 in Table 2

Spruce veneer was treated as in Example 3 but without tannin or laccase (control experiment). The weight change and antibacterial effects of the treatment (none) are shown in Table 2.

**Table 2. Bactericidal/bacteriostatic effects of tannins grafted onto wood surface based on the number of colony-forming units (CFU) and amount of tannin grafted onto the wood surface (weight increase) with laccase**

| Sample # | Treatment | Weight change, % | S. *aureus* CFU, g | *E. coli* CFU, g |
|---|---|---|---|---|
| Reference | Untreated wood | --- | 1.10 x 10⁸ | 8.20 x 10⁸ |
| 1 | Wood + water | -0.09 | 1.00 x 10⁸ | 1.00 x 10⁹ |
| 2 | Wood + tannic | 4.08 | 1.40 x 10⁶ | --- |
| | acid + laccase | | | |
| 3 | Wood + tannic | 4.02 | --- | 2.70 x 10⁷ |
| | acid + laccase | | | |
| 4 | Wood + mimosa | 0.81 | 2.60 x 10⁶ | 8.70 x 10⁸ |
| | tannin + laccase | | | |

## Claims

1. A method of imparting antibacterial properties to lignocellulosic materials, comprising the steps of:
- providing lignocellulosic material such as wood, paper, paperboard, or a wood-based composite board or laminate
- providing hydrolyzable tannin such as such as tannic acid, condensed tannin, or a derivative of hydrolyzable or condensed tannin
- providing a phenol-oxidizing enzyme or an organism such as a white-rot fungus able to generate phenol-oxidizing enzymes
- contacting the lignocellulosic material with tannin and/or tannin derivatives and with at least one enzyme with phenol-oxidizing properties or with a fungus or other organism able to generate phenol-oxidizing enzymes
- allowing sufficient time for enzymatically catalyzed oxidation to produce radicals in the tannin and lignocellulosic material and for tannin to be grafted onto the lignin component of the lignocellulosic material via radical cross-linking, thereby rendering the surface of the lignocellulosic material antibacterial (bactericidal and/or bacteriostatic).

2. A method according to claim 1, wherein the lignocellulosic material is uncoated solid wood.

3. A method according to claim 1, wherein the lignocellulosic material is unbleached or partially bleached chemical, semichemical, or mechanical wood pulp used for making paper or paperboard.

4. A method according to claim 3, wherein the wood pulp has been fabricated into a paper sheet.

5. A method according to claim 1, wherein the lignocellulosic material is an uncoated wood composite board such as a hardboard, fiberboard, particleboard, or oriented strandboard.

6. A method according to claim 1, wherein the lignocellulosic material is a wood veneer, plywood, or a wood laminate.

7. A method according to any of the claims 1-6, wherein the lignocellulosic material is not wood but non-wood lignocellulosic material based on agrifibers or perennial plants.

8. A method according to any of the claims 1-7, wherein the lignocellulosic material treated with tannin and phenol-oxidizing enzyme has been fabricated into a product or a product component such as furniture, flooring, a box or other packaging material, a bathtub, or a kitchen worktop.

9. A lignocellulosic substrate with a surface having antibacterial properties, **characterized in that** tannins are grafted onto the lignocellulosic substrate.

10. A substrate as in claim 9, wherein the tannins are grafted onto the lignocellulosic substrate with assistance of a phenol-oxidizing enzyme.

11. A substrate according to claim 9 or 10, wherein the lignocellulosic substrate is uncoated solid wood.

12. A substrate according to claim 9 or 10, wherein the lignocellulosic substrate is unbleached or partially bleached chemical, semichemical, or mechanical wood pulp used for making paper or paperboard.

13. A substrate according to claim 19, wherein the wood pulp has been fabricated into a paper sheet.

14. A substrate according to any of the claims 9 - 13, wherein the tannin is condensed tannin (proanthocyanidin) or its derivative.

15. A substrate according to any of the claims 9 - 14, wherein the pehnol-oxidizing enzyme is laccase.
